# EUROPÄISCHE PATENTSCHRIFT

(11) **EP 2 921 668 B1**
(45) Veröffentlichungstag und Bekanntmachung des Hinweises auf die Patenterteilung: **17.08.2016**
(21) Anmeldenummer: 15154308.9
(22) Anmeldetag: 09.02.2015
(51) Int. Cl.: F01N 13/08, F01N 13/14, F01N 3/025, F01N 13/04, F01N 3/20

(54) **Abgasanlage**
Exhaust gas system
Système d'échappement

(30) Priorität: 19.03.2014 DE 102014205156
(43) Veröffentlichungstag der Anmeldung: 23.09.2015
(73) Patentinhaber: Eberspächer Exhaust Technology GmbH & Co. KG, 66539 Neunkirchen (DE)
(72) Erfinder: Többen, Heike, 73066 Uhingen (DE); Wirth, Georg, 73230 Kirchheim/Teck (DE)
(74) Vertreter: Ruttensperger, Bernhard

(56) Entgegenhaltungen:
- EP-A1- 1 564 386
- DE-A1- 19 646 025
- US-A- 3 886 739

## Beschreibung

Die vorliegende Erfindung betrifft eine Abgasanlage für eine Brennkraftmaschine, die insbesondere in einem Kraftfahrzeug angeordnet sein kann. Die Erfindung betrifft außerdem ein Verfahren zum Betreiben einer derartigen Abgasanlage.

Eine Abgasanlage umfasst in üblicher Weise einen Abgasstrang, der wenigstens ein Abgasrohr aufweist, dessen Rohrwand mit einer Innenseite einen Abgaspfad zum Führen einer Abgasströmung begrenzt. Der Abgasstrang beginnt am Motorblock der Brennkraftmaschine in der Regel mit einem Abgaskrümmer oder Abgassammler und endet zur Umgebung mit wenigstens einem Endrohr. In den Abgasstrang eingebunden sind üblicherweise mehrere Abgasnachbehandlungseinrichtungen, wie zum Beispiel Katalysatoren und Partikelfilter. Ferner enthält der Abgasstrang regelmäßig wenigstens einen Schalldämpfer. Um die einzelnen Komponenten miteinander zu verbinden, enthält der Abgasstrang vorgenannte Abgasrohre. Sensoren zum Messen von Parametern der Abgasströmung und/oder der Abgasanlage sowie Injektoren zum Einbringen eines Reaktionsmittels, insbesondere eines Reduktionsmittels oder eines Oxidationsmittels, oder dergleichen in die Abgasströmung können im Bereich dieser Abgasrohre am Abgasstrang angebracht sein.

Vom Abgaskrümmer bis zum Endrohr herrschen im Betrieb der Abgasanlage innerhalb des Abgasstrangs unterschiedliche Temperaturen. In kälteren Bereichen besteht dabei die Gefahr einer Kondensatbildung und Ablagerungsbildung im Inneren des Abgasstrangs. Beispielsweise kann sich ein Film aus Verbrennungsresten, wie zum Beispiel Ruß, Wasser und Kohlenwasserstoffe, an der Innenseite der Rohrwand anlagern. Wird beispielsweise in Verbindung mit einem SCR-System, wobei SCR für Selective Catalytic Reduction steht, eine wässrige Harnstofflösung als Reduktionsmittel in die Abgasströmung eingebracht, besteht außerdem die Gefahr einer Bildung von Harnstoffkristallen. Diese Verunreinigungen innerhalb des Abgasstrangs können beispielsweise die Strömungsführung der Abgasströmung beeinträchtigen. Ferner können diese Verunreinigungen eine erhöhte Korrosionsgefahr für die betroffene Rohrwand bilden. Insbesondere bei einem Kaltstart sowie bei einem Kurzstreckenbetrieb ist die Gefahr einer solchen Kondensatbildung und Ablagerungsbildung besonders groß, da sich einerseits die betroffenen Rohrwände noch auf einem vergleichsweise niedrigerem Temperaturniveau befinden und da andererseits relativ hohe Temperaturen erforderlich sind, um die Ablagerungen wieder abzubauen.

Um diesen Probleme entgegenzuwirken, ist es grundsätzlich möglich, die Abgasströmung stärker aufzuheizen, wodurch auch der Abgasstrang insgesamt rascher auf ein erhöhtes Temperaturniveau gebracht werden kann. Zum Einsatz können hierbei elektrisch beheizbare Katalysatoren kommen, die üblicherweise als EKAT bezeichnet werden. Ein derartiger EKAT benötigt jedoch vergleichsweise viel elektrische Energie, um den relativ großen Abgasmassenstrom entsprechend aufheizen zu können. Dabei entsteht ein zusätzliches Problem hinsichtlich der elektrischen Isolierung der hohen elektrischen Ströme gegenüber den metallischen Komponenten des Abgasstrangs, wenn entsprechende elektrische Leitungen durch eine üblicherweise metallische Rohrwand hindurchgeführt werden müssen.

Die US 3 886 739 A offenbart eine Abgasanlage gemäß dem Oberbegriff des Anspruchs 1. Bei dieser bekannten Abgasanlage ist zum Vermeiden einer zu schnellen Abkühlung des in der Abgasanlage vorgesehenen Katalysators und damit zum Vermeiden einer Beschädigung des Katalysators im Bereich des Katalysators ein Abgasrohr umgebend eine elektrisch erregbare Heizeinrichtung vorgesehen. Die Heizeinrichtung wird insbesondere dann in Betrieb genommen, wenn die Brennkraftmaschine abgeschaltet worden ist und eine zu schnelle Abkühlung des Katalysators zu Verformungen nach sich ziehenden thermischen Spannungen führen kann.

Die vorliegende Erfindung beschäftigt sich mit dem Problem, für eine Abgasanlage der vorstehend beschriebenen Art bzw. für ein zugehöriges Betriebsverfahren eine verbesserte Ausführungsform anzugeben, die sich insbesondere dadurch auszeichnet, dass die Gefahr einer unerwünschten Kondensat- und/oder Ablagerungsbildung reduziert ist, wobei außerdem der hierzu erforderliche Energiebedarf reduziert ist

Dieses Problem wird erfindungsgemäß durch die Abgasanlage gemäß Anspruch 1 und das Verfahren gemäß Anspruch 13 gelöst. Vorteilhafte Ausführungsformen sind Gegenstand der abhängigen Ansprüche.

Die Erfindung beruht auf dem allgemeinen Gedanken, wenigstens einen Bereich des Abgasrohrs, der einer Kondensationsgefahr bzw. einer Niederschlagsgefahr ausgesetzt ist, mittels einer externen, also an einer Außenseite der jeweiligen Rohrwand angeordneten elektrischen Heizeinrichtung zu beheizen. Während ein herkömmliches Aufheizen der Abgasströmung mittels eines EKATs global die gesamte Abgasanlage stromab des EKATs aufheizt, wird gemäß diesem Vorschlag die Abgasanlage nur lokal beheizt, nämlich im jeweiligen von der Kondensationsgefahr bzw. Niederschlagsgefahr tatsächlich betroffenen Bereich. Hierdurch ist signifikant weniger elektrische Energie erforderlich, um die Gefahr unerwünschter Kondensat- und Ablagerungsbildung zu reduzieren. Des Weiteren ist vorgesehen, dass die Heizeinrichtung an der Außenseite derjenigen Rohrwand angeordnet ist, deren Innenseite den Abgaspfad zum Führen der Abgasströmung begrenzt. Durch Beheizen der Außenseite wird durch die in der Regel metallische Rohrwand nahezu verlustfrei auch die Innenseite der Rohrwand beheizt, um dort die Kondensatbildung bzw. Ablagerungsbildung zu behindern. Ferner ist vorteilhaft, dass trotz elektrischer Heizeinrichtung keine elektrischen Leitungen durch die Rohrwand durchgeführt werden müssen, so dass auch bei großen Strömen die elektrische Isolation vergleichsweise einfach beherrschbar ist.

Für die erfindungsgemäße Abgasanlage wird außerdem vorgeschlagen, die Heizeinrichtung mit wenigstens einer Heizwendel auszustatten, die einen zu beheizenden Längsabschnitt des Abgasrohrs an der Außenseite der Rohrwand mehrfach umschlingt. Die jeweilige Heizwendel weist dabei einen elektrischen Leiter aus einem Widerstandsheizmaterial auf. Ein derartiges Widerstandsheizmaterial zeichnet sich dadurch aus, dass es elektrisch leitend ist und sich bei der Leitung elektrischer Ströme aufheizt. Üblicherweise handelt es sich hierbei um eine spezielle Metalllegierung. Ferner ist zwischen dem Leiter und der Außenseite der Rohrwand ein elektrischer Isolator angeordnet, wodurch die Rohrwand bzw. das Abgasrohr von den elektrischen Strömen zum Betreiben der Heizeinrichtung elektrisch entkoppelt ist. Des Weiteren wird vorgeschlagen, die Heizeinrichtung mit einer thermisch isolierenden Hülle auszustatten, die das Abgasrohr mit der jeweiligen Heizwendel umhüllt Durch die thermisch isolierende Hülle an der Außenseite der Heizwendel wird erreicht, dass die von der Heizwendel erzeugte Wärme bevorzugt nach innen abgeleitet wird, also an die Rohrwand des betroffenen Längsabschnitts des Abgasrohrs. Mit Hilfe der Hülle kann somit die Effizienz der Heizeinrichtung erheblich verbessert werden. Des Weiteren kann die Hülle gleichzeitig eine wasserdichte Kapselung für die Heizeinrichtung bewirken. Ferner kann die Hülle einen Schutz vor Verunreinigungen für die Heizeinrichtung bilden. Auch kann die Hülle als Steinschlagschutz für die Heizeinrichtung wirken.

Entsprechend einer vorteilhaften Ausführungsform kann die Hülle eine am Abgasrohr montierte Schale und eine elektrisch isolierende Füllung aufweisen, die einen Ringraum zwischen Schale und Abgasrohr ausfüllt, in dem die jeweilige Heizwendel angeordnet ist. Die Schale kann dabei auf geeignete Weise am Abgasrohr befestigt sein. Zweckmäßig handelt es sich bei der Schale um ein Metallbauteil, beispielsweise ein Blechformteil, das an das Abgasrohr angeschweißt ist. Hierdurch ist der Ringraum vor festen und flüssigen Verunreinigungen geschützt Ferner bildet die Schale so einen effektiven Steinschlagschutz.

Bei einer anderen Ausführungsform kann der Isolator durch eine auf die Außenseite der Rohrwand aufgebrachte Isolierschicht gebildet sein, wobei der Leiter der Heizwendel auf diese Isolierschicht aufgewickelt ist und mit dieser in Kontakt steht. Eine geeignete Isolierschicht kann beispielsweise als Glimmerschicht ausgestaltet sein. Der Leiter der Heizwendel kann dabei bandförmig, also mit einem rechteckigen Querschnitt, oder drahtförmig, also mit einem runden Querschnitt, ausgestaltet sein. Alternativ kann die jeweilige Heizwendel einen den Leiter bildenden Kern und einen zumindest einen Teil des Isolators bildenden, den Kern umhüllenden Mantel aufweisen. In diesem Fall sind Leiter und Isolator um den zu beheizenden Rohrabschnitt gewickelt. Die Heizwendel kann außerdem zwischen Mantel und Kern eine elektrisch isolierende Pulverfüllung aufweisen, derart, dass der Kern den Mantel nicht berührt. Bevorzugt besitzt der Kern hier einen runden, insbesondere kreisförmigen, Querschnitt.

Bei einem nicht Erfindungsgemäßen Beispiel, kann zumindest eine solche Heizeinrichtung im Bereich einer Abgassonde angeordnet sein, die am Abgasrohr montiert ist. Eine derartige Abgassonde kann beispielsweise eine Lambda-Sonde oder eine NOX-Sonde sein. Derartige Sonden können insbesondere bei einem Kaltstart einer Beaufschlagung mit Kondensat ausgesetzt sein, wodurch sich die Sonden vergleichsweise stark abkühlen können, sogenanntes Abschrecken. Hierdurch wird eine ordnungsgemäße Messwerterfassung der Sonden stark beeinträchtigt. Durch Beheizen des Abgasrohrs im Bereich der Abgassonde lässt sich die Gefahr einer unerwünschten Abkühlung der jeweiligen Sonde durch Niederschlag oder Kondensat reduzieren, wodurch die ordnungsgemäße Funktion der jeweiligen Sonde verbessert ist.

Erfindungsgemäß ist zumindest eine solche Heizeinrichtung im Bereich einer Reaktionsmittelzuführung angeordnet , die das Abgasrohr umfasst In diesem Fall ist das Abgasrohr ein Bestandteil der Reaktionsmittelzuführung. Eine derartige Reaktionsmittelzuführung umfasst üblicherweise einen am Abgasrohr montierten Injektor, mit dessen Hilfe das jeweilige Reaktionsmittel in das Abgasrohr bzw. in die darin geführte Abgasströmung eingebracht werden kann. Beispielsweise kann stromauf eines Oxidationskatalysators ein Kraftstoff als Oxidationsmittel in die Abgasströmung eingebracht werden, der im Oxidationskatalysator umgesetzt werden soll, um die Abgasströmung aufzuheizen. Eine derartige intensive Aufheizung der Abgasströmung kann beispielsweise zum Regenerieren eines Partikelfilters erforderlich sein. Alternativ ist es mit Hilfe eines derartigen Injektors ebenso möglich, stromauf eines SCR-Katalysators ein geeignetes Reduktionsmittel, wie zum Beispiel eine wässrige Hamstofflösung, in die Abgasströmung einzubringen. Durch Thermolyse und Hydrolyse reagieren Wasser und Harnstoff zu Ammoniak und Kohlendioxid, die ihrerseits im SCR-Katalysator Stickoxide zu Stickstoff und Wasser umsetzen. Das jeweilige Reaktionsmittel, also insbesondere das vorstehend genannte Oxidationsmittel bzw. Reduktionsmittel, wird dabei regelmäßig in flüssiger Form eingebracht. Hierbei besteht die Gefahr eines Niederschlags des flüssigen Reaktionsmittels, zum Beispiel am Abgasrohr oder an einem statischen Mischer der Reaktionsmittelzuführung, der zwischen dem vorgenannten Injektor und dem vorgenannten SCR-Katalysator bzw. Oxidationskatalysator angeordnet sein kann. Mit Hilfe der Heizeinrichtung kann nun eine Verdampfung dieses Niederschlags unterstützt werden, um bleibende Ablagerungen, die beispielsweise durch Kristallisationsvorgänge entstehen können, zu vermeiden.

Gemäß der Erfindung ist die jeweilige Heizeinrichtung im Bereich des besagten Injektors angeordnet Auf diese Weise wird gerade im Bereich des Injektors die Gefahr einer dauerhaften Ablagerung vermieden.

Zusätzlich ist die jeweilige Heizeinrichtung im Bereich eines Wandabschnitts des Abgasrohrs angeordnet , der in einer Einsprührichtung des Injektors dem Injektor gegenüberliegt. Bei niedrigen Strömungsgeschwindigkeiten kann das Reaktionsmittel an der Innenseite der Rohrwand genau in diesem Wandabschnitt als Niederschlag auftreffen. Durch gezieltes Beheizen dieses Wandabschnitts wird das Verdampfen des Niederschlags verbessert und die Gefahr einer Kristallisation reduziert.

Zusätzlich kann die jeweilige Heizeinrichtung im Bereich eines Mischers angeordnet sein, der im Abgasrohrstrom stromab des Injektors angeordnet ist. Der Mischer, der auch als statischer Mischer bezeichnet werden kann, verbessert bei seiner Durchströmung die Durchmischung des eingebrachten Reaktionsmittels mit der Abgasströmung. Gleichzeitig dient der Mischer auch als Aufpralffläche für flüssiges Reaktionsmittel, um das Reaktionsmittel zu verdampfen. Insoweit wirkt der Mischer auch als Verdampfer. Durch Beheizen des Abgasrohrs im Bereich des Mischers kann dem Mischer gezielt Wärme zugeführt werden, wodurch seine Verdampfungswirkung verbessert ist. Insoweit lässt sich auch am Mischer die Gefahr einer Kristallisation des Reaktionsmittels reduzieren.

Entsprechend einer vorteilhaften Weiterbildung kann der Mischer einen zylindrischen Rohrkörper aufweisen, von dem mehrere Leitschaufeln nach innen abstehen und der an der Innenseite der Rohrwand anliegt. Durch den körperlichen Kontakt zwischen Rohrkörper und Rohrwand ergibt sich ein verbesserter Wärmeübergang zwischen Rohrwand und Rohrkörper, so dass die mit Hilfe der Heizeinrichtung in die Rohrwand eingebrachte Wärme effizient an den Rohrkörper und über diesen an die Leitschaufeln weitergeleitet werden kann. Der Mischer kann mit Rohrkörper und Leitschaufeln integral aus einem Stück hergestellt sein. Beispielsweise kann es sich beim Mischer um ein einteiliges Blechformteil handeln. Ebenso kann es sich beim Mischer um ein einteiliges Gussteil oder Sinterteil handeln. Alternativ ist auch ein gebauter Mischer denkbar.

Gemäß einer vorteilhaften Weiterbildung kann die Rohrwand im Bereich des Mischers eine axiale Unterbrechung aufweisen, die vom Rohrkörper überbrückt ist. Die axiale Unterbrechung bildet einen ringförmigen Schlitz, der einen Axialabstand zwischen den an die Unterbrechung angrenzenden Rohrabschnitten erzeugt. Der Rohrkörper des Mischers kann axial größer sein als diese axiale Unterbrechung und kann außerdem so positioniert sein, dass er die Unterbrechung überbrückt. Im Bereich der Unterbrechung ist somit die Außenseite der Rohrwand durch eine Außenseite des Rohrkörpers gebildet, während die Innenseite der Rohrwand im Bereich der Unterbrechung durch eine Innenseite des Rohrkörpers gebildet ist. Zwischen dem Rohrkörper und dem Abgasrohr ist axial beiderseits der Unterbrechung eine axiale Überdeckung gegeben. Durch die Unterbrechung des Abgasrohrs im Bereich des Mischers kann die von der Heizeinrichtung erzeugte Wärme besser, insbesondere direkt, auf den Rohrkörper übertragen werden, so dass die Leitungsverluste durch die Rohrwand hindurch im Bereich des Mischers reduziert bzw. vermieden werden können.

Besonders vorteilhaft ist eine Weiterbildung, bei welcher die jeweilige Heizwendel im Bereich der Unterbrechung direkt am Rohrkörper anliegt. Hierdurch lässt sich der Mischer besonders effizient beheizen.

Gemäß einer anderen vorteilhaften Ausführungsform kann vorgesehen sein, dass die Heizwendel im Bereich des Rohrkörpers eine größere Wicklungsdichte aufweist als außerhalb des Rohrkörpers. Durch die erhöhte Wicklungsdichte kann die Heizwendel im Bereich des Rohrkörpers mehr Wärme abgeben, wodurch die gezielte Beheizung des Mischers verbessert wird. Diese Maßnahme ist dabei unabhängig davon, ob das Abgasrohr im Bereich des Mischers eine vom Rohrkörper überbrückte Unterbrechung besitzt oder axial durchgehend ausgestaltet ist.

Der Rohrkörper des Mischers kann auch axial fluchtend zu den an die Unterbrechung angrenzenden Abschnitten des Abgasrohrs in die Unterbrechung eingesetzt sein, so dass der Rohrkörper des Mischers selbst in der Unterbrechung einen Axialabschnitt des Abgasrohrs bildet. Der Rohrkörper ist zweckmäßig mit den an die Unterbrechung angrenzenden Abschnitten des Abgasrohrs verschweißt, beispielsweise mittels umlaufender Schweißnähte.

Bei einer anderen Ausführungsform kann die Heizeinrichtung eine Steuerung mittels Zeit- und/oder Kennfeld besitzen. Eine derartige Steuerung lässt sich besonders einfach realisieren. Alternativ kann die Heizeinrichtung wenigstens ein PTC-Element aufweisen, das mit dem Leiter in Reihe geschaltet ist oder das durch den Leiter gebildet ist. PTC steht dabei für Positive Temperature Coefficient und bedeutet, dass das jeweilige PTC-Element aus einem speziellen Widerstandsheizmaterial besteht, das sich bei seiner Durchstromung erhitzt und außerdem mit zunehmender Temperatur einen höheren elektrischen Widerstand zeigt. Ferner lässt sich ein derartiges PTC-Element auf eine bestimmte Temperatur auslegen, ab der keine weitere Durchstromung mehr möglich ist, so dass dann auch die Temperatur nicht weiter zunehmen kann. Hierdurch ergibt sich eine besonders einfache Selbstregelung für eine vorbestimmte Temperatur. Alternativ kann die Heizeinrichtung eine Regelung mittels wenigstens eines Temperatursensors besitzen. Relevante Temperaturen für die Regelung können beispielsweise die Temperatur der Rohrwand und/oder die aktuelle Abgastemperatur und die aktuelle Reaktionsmitteltemperatur sein.

Bei einer anderen vorteilhaften Ausführungsform kann die Heizeinrichtung eine Steuereinrichtung aufweisen, die so ausgestaltet und/oder programmiert ist, dass sie die Heizeinrichtung zur Durchführung eines nachfolgend näher erläuterten Betriebsverfahrens ansteuern kann.

Das erfindungsgemäße Verfahren zum Betreiben der Abgasanlage bzw. der jeweiligen Heizeinrichtung charakterisiert sich dadurch, dass eine Bestromung der jeweiligen Heizwendel so gesteuert und/oder geregelt wird, dass wenigstens ein Bereich im Abgasrohr, der einer Kondensationsgefahr einer in der Abgasströmung mitgeführten verdampften Flüssigkeit oder einer Niederschlagsgefahr einer in die Abgasströmung eingebrachten Flüssigkeit ausgesetzt ist, über eine Verdampfungstemperatur der jeweiligen Flüssigkeit aufgeheizt wird. Durch diese Maßnahme wird erreicht, dass der Kondensation bzw. Niederschlag ausgesetzte Bereich des Abgasrohrs durch Verdampfung wieder von Kondensat und Niederschlag befreit werden kann, wodurch beispielsweise die Gefahr einer Kristallisation des Kondensats bzw. Niederschlags reduziert ist. Der jeweilige Bereich des Abgasrohrs kann gemäß den vorstehend beschriebenen Ausführungsformen der Abgasanlage ein Wandabschnitt des Abgasrohrs oder ein am Abgasrohr angebrachter Sensor oder ein im Abgasrohr angeordneter Mischer bzw. dessen Schaufeln sein.

Gemäß einer vorteilhaften Ausführungsform des Verfahrens bzw. der Steuereinrichtung kann bzw. können eine aktuelle Abgastemperatur und/oder eine aktuelle Reaktionsmitteltemperatur und/oder eine aktuelle Reaktionsmitteleinspritzmenge bei der Bestromung der jeweiligen Heizwendel berücksichtigt werden. Die Steuereinrichtung der Heizeinrichtung kommuniziert beispielsweise mit einer Steuereinrichtung der Reaktionsmittelzuführung und kennt dadurch beispielsweise die aktuelle Einspritzmenge. Durch eine entsprechende Temperatursensorik kennt die Steuereinrichtung außerdem die aktuelle Abgastemperatur und die aktuelle Reaktionsmitteltemperatur. Ferner kann die Steuereinrichtung die aktuelle Temperatur des Abgasrohrs bzw. der Rohrwand kennen. Aus den unterschiedlichen Parametern lässt sich die Gefahr einer Kondensatbildung bzw. die Gefahr eines Reaktionsmittelniederschlags ermitteln und die erforderliche Wärme berechnen, die zum Verdampfen des Niederschlags bzw. Kondensats erforderlich ist. Hierdurch arbeitet die Heizeinrichtung besonders effizient.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
- Fig. 1 und 2: jeweils eine stark vereinfachte, schaltplanartige Prinzipdarstellung einer Abgasanlage mit Heizeinrichtung, bei verschiedenen Ausführungsformen,
- Fig. 3 bis 6: jeweils ein stark vereinfachter halber Längsschnitt der Abgasanlage im Bereich der Heizeinrichtung bei verschiedenen Ausführungsformen.

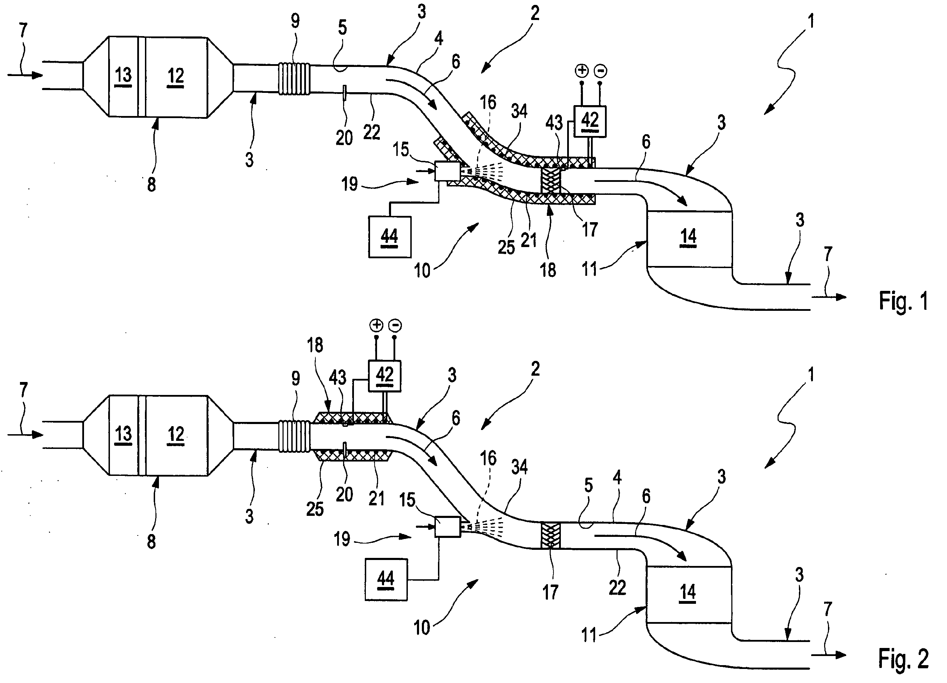

Entsprechend den Figuren 1 und 2 umfasst eine Abgasanlage 1 für eine hier nicht gezeigte Brennkraftmaschine einen Abgasstrang 2, der von einem Motorblock der Brennkraftmaschine bis zu einem Endrohr der Abgasanlage 1 führt.

Hierzu enthält der Abgasstrang 2 zumindest ein Abgasrohr 3, das eine Rohrwand 4 besitzt. Die Rohrwand 4 begrenzt an ihrer Innenseite 5 einen in den Figuren 1 und 2 durch Pfeile angedeuteten Abgaspfad 6 zum Führen einer ebenfalls durch Pfeile angedeuteten Abgasströmung 7. Innerhalb des Abgasstrangs 2 verbinden die Abgasrohre 3 einzelne Komponenten der Abgasanlage 1 miteinander, die im Abgasstrang 2 angeordnet sind. Rein exemplarisch sind in den Figuren 1 und 2 ein Partikelfilter 8, ein Entkopplungselement 9 und ein SCR-Katalysator 11 eines SCR-Systems 10 vorgesehen. Der Partikelfilter 8 enthält ein Partikelfilterelement 12 und diesem vorgeschaltet ein Oxidationskatalysatorelement 13. Das Entkoppelelement 9 dient zur schwingungsmäßigen Entkopplung der damit verbundenen Abschnitte des Abgasstrangs 2. Der SCR-Katalysator 11 enthält ein SCR-Katalysatorelement 14. Das SCR-System 10 enthält außerdem einen Injektor 15 zum Einbringen eines Reaktionsmittels in die Abgasströmung 7, wobei der Injektor 15 einen Einsprühstrahl 16 generiert, der sich fächerförmig bzw. kegelförmig aufweitet. Ferner enthält das SCR-System 10 im zugehörigen Abgasrohr 3 einen statischen Mischer 17, der außerdem als Verdampfer für das eingebrachte flüssige Reaktionsmittel dienen kann.

Die hier vorgestellte Abgasanlage 1 weist außerdem zumindest eine elektrische Heizeinrichtung 18 auf, mit deren Hilfe zumindest ein Längsabschnitt des Abgasrohrs 3 beheizt werden kann. Bei der in Fig. 1 gezeigten Ausführungsform ist die Heizeinrichtung 18 im SCR-System 10 angeordnet, also im Bereich einer Reaktionsmittelzuführung 19, die hier durch das SCR-System 10 gebildet ist. In diesem Fall dient die Reaktionsmittelzuführung 19 also zum Zuführen eines Reduktionsmittels als Reaktionsmittel. Bei einer anderen Ausführungsform kann eine solche Reaktionsmittelzuführung 19 auch beispielsweise stromauf des Partikelfilters 8 angeordnet sein, um Kraftstoff der Abgasströmung 7 zuzuführen, der im Oxidationskatalysatorelement 13 umgesetzt werden kann. Fall dient die Reaktionsmittelzuführung 19 also zum Zuführen eines Oxidationsmittels als Reaktionsmittel.

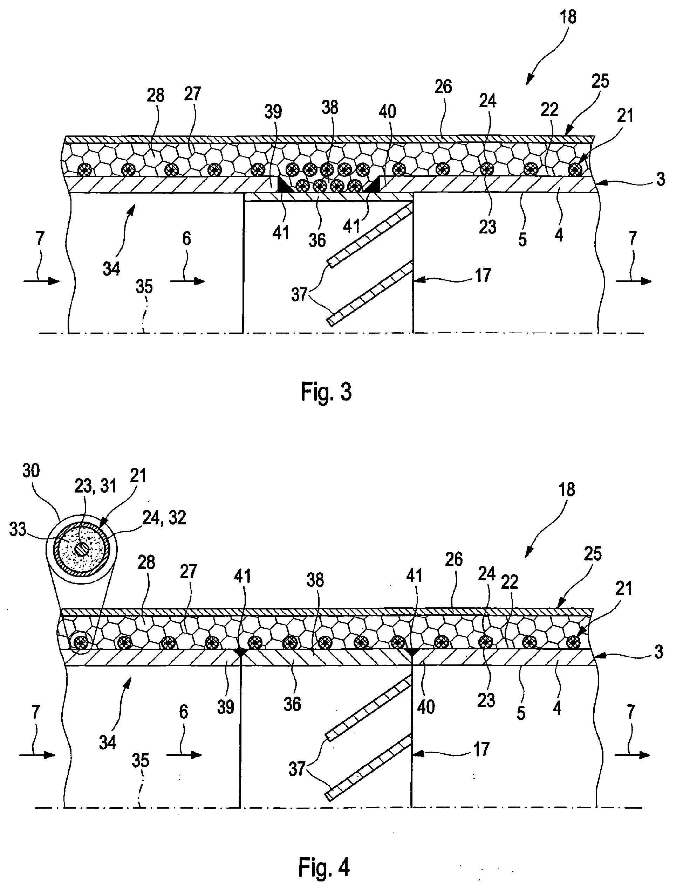

Bei dem in Fig. 2 nacht erfindungsgemäßen Beispiel, ist die Heizeinrichtung 18 im Bereich einer Abgassonde 20 angeordnet, die am Abgasrohr 3 montiert ist. Die Abgassonde 20 kann beispielsweise eine Lambda-Sonde oder ein NOX-Sensor sein. Obwohl in den Figuren 1 und 2 die beiden Beispiele der Heizeinrichtungen 18 alternativ dargestellt sind, kann bei einer anderen Ausführungsform der Abgasanlage vorgesehen sein, dass beide Heizeinrichtungen 18 gleichzeitig verwirklicht sind. In den Figuren 3 bis 6 werden Ausführungsformen der in Fig. 1 gezeigten Anordnung der Heizeinrichtung 18 erläutert. Soweit sinnvoll, sind diese speziellen Ausgestaltungen dann auch für die in Fig. 2 gezeigte Anordnung der Heizeinrichtung 18 realisierbar.

Entsprechend den Figuren 1 bis 6 umfasst die jeweilige Heizeinrichtung 18 zumindest eine Heizwendel 21, die im gewünschten Längsabschnitt des Abgasrohrs 3 an einer Außenseite 22 der Rohrwand 4 das jeweilige Abgasrohr 3 mehrfach umschlingt. Entsprechend den Figuren 3 bis 6 umfasst die jeweilige Heizwendel 21 einen elektrischen Leiter 23, der aus einem Widerstandsheizmaterial besteht. Ferner ist zwischen dem Leiter 23 und der Außenseite 22 der Rohrwand 4 ein elektrischer Isolator 24 angeordnet. Ferner umfasst die Heizeinrichtung 18 eine thermisch isolierende Hülle 25, die das Abgasrohr 3 im Bereich der jeweiligen Heizwendel 21 umhüllt, derart, dass die jeweilige Heizwendel 21 vollständig von der Hülle 25 eingeschlossen ist. Beispielsweise besitzt die Hülle 25 eine am Abgasrohr 3 montierte Schale 26 sowie eine elektrisch isolierende Füllung 27, die einen zwischen der Schale 26 und dem Abgasrohr 4 ausgebildeten Ringraum 28 ausfüllt, in dem die jeweilige Heizwendel 21 angeordnet ist. Die Schale 26 ist vorzugsweise aus Metall und kann mit dem Abgasrohr 3 verschweißt sein. Die Füllung 27 kann durch elektrisch isolierendes Fasermaterial gebildet sein, das z.B. als Fasermatte konfektioniert ist.

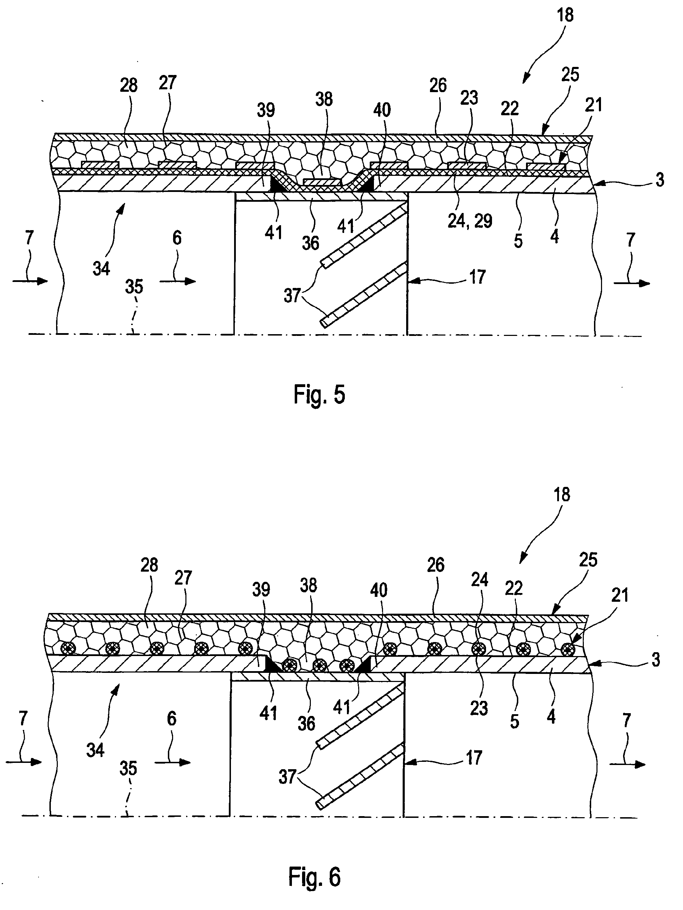

Bei der in Fig. 5 gezeigten Ausführungsform ist der Isolator 24 durch eine Isolierschicht 29 gebildet, die auf die Außenseite 22 der Rohrwand 4 aufgebracht ist. Der Leiter 23 ist auf die Isolierschicht 29 aufgewickelt und steht mit dieser in Kontakt. In diesem Fall ist die Heizwendel 21 nur durch den Leiter 23 gebildet. Im Beispiel der Fig. 5 besitzt der Leiter 23 einen rechteckförmigen Querschnitt, so dass der Leiter 23 im Wesentlichen bandförmig gestaltet ist. Die Isolierschicht 29 kann durch elektrisch isolierendes Fasermaterial gebildet sein, das z.B. als Fasermatte konfektioniert ist.

Bei den in den Figuren 3, 4 und 6 gezeigten Ausführungsformen besitzt die jeweilige Heizwendel 21 einen anderen Aufbau, wobei in Fig. 4 in einem vergrößerten Detail 30 ein Querschnitt der Heizwendel 21 wiedergegeben ist. Dementsprechend weist die Heizwendel 21 bei diesen Ausführungsformen einen Kern 31 auf, der von einem Mantel 32 umhüllt ist, wobei außerdem zwischen Mantel 32 und Kern 31 eine Pulverfüllung 33 angeordnet sein kann. Der Kern 31 bildet den Leiter 23. Der Mantel 32 bildet zumindest teilweise den Isolator 24. Sofern die Pulverfüllung 33 vorhanden ist, ist diese elektrisch isolierend und bildet einen weiteren Teil des Isolators 24.

Gemäß Fig. 1 ist die Heizeinrichtung 18 im Bereich des Injektors 15 angeordnet, wodurch im Bereich des Injektors 15 die Gefahr einer dauerhaften Anlagerung von Kondensat und Reaktionsmittel reduziert werden kann. Ferner ist gemäß Fig. 1 die Heizeinrichtung 18 im Bereich eines Wandabschnitts 34 angeordnet, der in der Einsprührichtung des Injektors 15 dem Injektor 15 gegenüberliegt. Dementsprechend kann der Einsprühstrahl 16 besagten Wandabschnitt 34 treffen. Bei der in den Beispielen der Figuren 1 und 2 angedeuteten koaxialen Einbringung des Reaktionsmittels konzentrisch zu einer in den Figuren 3 bis 6 angedeuteten Längsmittelachse 35 des Abgasrohrs 3 ist besagter Wandabschnitt 34 zylindrisch und befindet sich unmittelbar stromauf des Mischers 17. Dementsprechend ist dieser Wandabschnitt 34 auch in den Figuren 3 bis 6 angedeutet.

Wie sich den Figuren 1 und 3 bis 6 entnehmen lässt, ist die Heizeinrichtung 18 zusätzlich im Bereich des Mischers 17 angeordnet, da auch der Mischer 17 eine bevorzugte Auftrefffläche für das flüssig eingebrachte Reaktionsmittel repräsentiert. Bei den hier gezeigten Ausführungsbeispielen besitzt der Mischer 17 einen zylindrischen Rohrkörper 36, von dem mehrere Leitschaufeln 37 nach innen, also in Richtung Längsmittelachse 35 abstehen. Dabei sind die Leitschaufeln 37 im Wesentlichen radial orientiert. Grundsätzlich kann das Abgasrohr 3 auch im Bereich des Mischers 17 axial durchgehend ausgestaltet sein, wobei dann der Rohrkörper 36 über seine gesamte axiale Länge möglichst flächig an der Innenseite 5 der Rohrwand 4 anliegt, um eine möglichst effiziente Wärmeübertragung zwischen Abgasrohr 3 und Mischer 17 zu ermöglichen. Bei den in den Figuren 3 bis 6 gezeigten bevorzugten Ausführungsformen ist jedoch das Abgasrohr 3 bzw. seine zylindrische Rohrwand 4 im Bereich des Mischers 17 mit einer axialen Unterbrechung 38 versehen, derart, dass sich zwei an diese Unterbrechung 38 axial angrenzende Abschnitte 39, 40 mit ihren axialen Stirnseiten in der Unterbrechung 38 gegenüberliegen und in der Axialrichtung voneinander beabstandet sind. Diese Unterbrechung 38 ist vom Rohrkörper 36 des Mischers 17 überbrückt, und zwar zweckmäßig derart, dass der Rohrkörper 36 beide Rohrabschnitte 39, 40 jeweils axial überdeckt. Zweckmäßig ist der Rohrkörper 36 mit den beiden Rohrabschnitten 39, 40 jeweils mittels einer in der Umfangsrichtung vollständig und geschlossen umlaufenden Schweißnaht 41 fest und dicht verbunden. Bei den Varianten der Figuren 3, 5 und 6 ist diese axiale Überdeckung des Rohrkörpers 36 mit den beiden Rohrabschnitten 39, 40 vorgesehen. In diesem Fall liegt der Rohrkörper 36 jeweils an der Innenseite 5 der jeweiligen Rohrwand 4 an. Im Unterschied dazu zeigt Fig. 4 eine Ausführungsform, bei welcher der Rohrkörper 36 in die Unterbrechung 38 bündig zu den Rohrabschnitten 39, 40 eingesetzt ist, so dass die beiden Rohrabschnitte 39 mit ihren axialen Stirnseiten jeweils auf Stoß mit den axialen Stirnseiten des Rohrkörpers 36 angeordnet sind. Auch diese Stöße sind mit den Schweißnähten 41 miteinander verbunden.

Wie sich Fig. 3 entnehmen lässt, kann die Heizwendel 21 im Bereich des Rohrkörpers 36, insbesondere im Bereich der Unterbrechung 38, eine höhere Wicklungsdichte aufweisen als außerhalb der Unterbrechung 38 bzw. außerhalb des Rohrkörpers 36. Erkennbar ist in Fig. 3 rein exemplarisch ein geringerer Axialabstand zwischen benachbarten Windungen der Heizwendel 21. Ferner ist im Beispiel der Fig. 3 die Heizwendel 21 im Bereich der Unterbrechung 38 in Radialrichtung zweilagig ausgeführt, wodurch sich ebenfalls eine erhöhte Wicklungsdichte ergibt.

Des Weiteren ist bei den hier gezeigten Ausführungsformen der Figuren 3 bis 6 vorgesehen, dass die Heizwendel 21 im Bereich der Unterbrechung 38 direkt am Rohrkörper 36 anliegt. Zu diesem Zweck ist bei der in Fig. 5 gezeigten Ausführungsform die Isolierschicht 29 auch im Bereich der Unterbrechung 38 vorgesehen und dort auf den Rohrkörper 36 aufgebracht.

Gemäß den Figuren 1 und 2 kann die Heizeinrichtung 18 außerdem eine Steuereinrichtung 42 aufweisen, die eine Bestromung der Heizwendel 21 steuert. Dabei kann die Steuereinrichtung 42 bei einer einfachen Ausführungsform eine einfache Steuerung realisieren, die mit Hilfe von Zeitfeldern und/oder Kennfeldern arbeitet. Ebenso ist es möglich, dass die Temperatursteuerung der Heizeinrichtung 18 mit Hilfe wenigstens eines PTC-Elements erfolgt, das mit dem Leiter 23 in Reihe geschaltet ist oder das zumindest teilweise durch den Leiter 23 gebildet ist. Ebenso ist denkbar, dass die Steuereinrichtung 42 die Heizeinrichtung 18 regelt, also die Bestromung der Heizwendel 21 im Sinne einer Regelung durchführt. Hierzu kann zumindest ein Temperatursensor 43 vorgesehen sein, der auf geeignete Weise mit der Steuereinrichtung 42 verbunden ist. Im Beispiel der Fig. 1 ist der Temperatursensor 43 im Bereich des Mischers 17 angeordnet. Im Beispiel der Fig. 2 ist der Temperatursensor 43 im Bereich des Sensors 20 angeordnet. Die Steuereinrichtung 42 ist zweckmäßig so ausgestaltet bzw. programmiert, dass sie die Bestromung der jeweiligen Heizwendel 21 so steuert bzw. regelt, dass die relevanten Bereiche im Abgasrohr 3 über eine Verdampfungstemperatur aufgeheizt werden. Die relevanten Bereiche sind dabei diejenigen Bereiche, die einer erhöhten Kondensationsgefahr einer in der Abgasströmung 7 mitgeführten verdampften Flüssigkeit oder einer erhöhten Niederschlagsgefahr einer in die Abgasströmung 7 eingebrachten Flüssigkeit ausgesetzt sind. Die Verdampfungstemperatur ist dabei auf die jeweilige Flüssigkeit abgestimmt. Im Fall der Fig. 1 handelt es sich um die Verdampfungstemperatur des Reaktionsmittels, wobei die betroffenen Bereiche im Wesentlichen der Mischer 17 bzw. die Leitschaufeln 37 des Mischers 17 und der stromauf daran anschließende Wandabschnitt 34 sind. Ebenso ist der Bereich des Injektors 15 betroffen. Im Beispiel der Fig. 2 ist die relevante Flüssigkeit Wasser und der relevante Bereich ist um den Sensor 20 angeordnet.

Besonders zweckmäßig ist die Steuereinrichtung 42 so konfiguriert, dass sie bei der Bestromung der jeweiligen Heizwendel 21 eine aktuelle Abgastemperatur und/oder eine aktuelle Reaktionsmitteltemperatur und/oder eine aktuelle Reaktionsmitteleinspritzmenge berücksichtigt. Hierzu kann die Steuereinrichtung 42 der Heizeinrichtung 18 beispielsweise mit einer Steuereinrichtung 44 des SCR-Systems 10 kommunizieren, die beispielsweise zum Ansteuern des Injektors 15 dient.

## Patentansprüche

1. Abgasanlage für eine Brennkraftmaschine,
- mit einem Abgasstrang (2), der wenigstens ein Abgasrohr (3) aufweist, dessen Rohrwand (4) mit einer Innenseite (5) einen Abgaspfad (6) zum Führen einer Abgasströmung (7) begrenzt,
- mit wenigstens einer elektrischen Heizeinrichtung (18) zum Beheizen wenigstens eines Längsabschnitts des Abgasrohrs (3),
- wobei die Heizeinrichtung (18) wenigstens eine Heizwendel (21) aufweist, die im jeweiligen Längsabschnitt das Abgasrohr (3) an einer Außenseite (22) der Rohrwand (4) mehrfach umschlingt,
- wobei die jeweilige Heizwendel (21) einen elektrischen Leiter (23) aus einem Widerstandsheizmaterial aufweist,
- wobei zwischen dem Leiter (23) und der Außenseite (22) der Rohrwand (4) ein elektrischer Isolator (24) angeordnet ist,
- wobei die Heizeinrichtung (18) eine thermisch isolierende Hülle (25) aufweist, die das Abgasrohr (3) zumindest im Bereich der jeweiligen Heizwendel (21) umhüllt,
**dadurch gekennzeichnet, dass** eine solche Heizeinrichtung (18) im Bereich einer Reaktionsmittelzuführung (19) angeordnet ist, die das Abgasrohr (3) umfasst, zum Unterstützen der Verdampfung eines Niederschlags von durch die Reaktionsmittelzuführung (19) in flüssiger Form eingebrachtem Reaktionsmittel.

2. Abgasanlage nach Anspruch 1,
**dadurch gekennzeichnet,**
**dass** die Hülle (25) eine am Abgasrohr (3) montierte Schale (26) und eine elektrisch isolierende Füllung (27) aufweist, die einen Ringraum (28) zwischen Schale (26) und Abgasrohr (3) ausfüllt, in dem die jeweilige Heizwendel (21) angeordnet ist.

3. Abgasanlage nach Anspruch 1 oder 2,
**dadurch gekennzeichnet,**
- **dass** der Isolator (24) durch eine auf die Außenseite (22) der Rohrwand (4) aufgebrachte Isolierschicht (29) gebildet ist, wobei der Leiter (23) auf diese Isolierschicht (29) aufgewickelt ist und mit dieser in Kontakt steht, oder
- **dass** die jeweilige Heizwendel (21) einen den Leiter (23) bildenden Kern (31) und einen zumindest einen Teil des Isolators (24) bildenden, den Kern (31) umhüllenden Mantel (32) aufweist.

4. Abgasanlage nach einem der Ansprüche 1 bis 3,
**dadurch gekennzeichnet,**
**dass** eine solche Heizeinrichtung (18) im Bereich einer Abgassonde (20) angeordnet ist, die am Abgasrohr (3) montiert ist.

5. Abgasanlage nach einem der Ansprüche 1 bis 4,
**dadurch gekennzeichnet,**
**dass** die jeweilige Heizeinrichtung (18) im Bereich eines Injektors (15) zum Einbringen von Reaktionsmittel in die Abgasströmung (7) angeordnet ist.

6. Abgasanlage nach einem der Ansprüche 1 bis 5,
**dadurch gekennzeichnet,**
**dass** die jeweilige Heizeinrichtung (18) im Bereich eines Wandabschnitts (34) des Abgasrohrs (3) angeordnet ist, der in einer Einsprührichtung eines Injektors (15) zum Einbringen von Reaktionsmittel in die Abgasströmung (7) dem Injektor (15 gegenüberliegt.

7. Abgasanlage nach einem der Ansprüche 1 bis 6,
**dadurch gekennzeichnet,**
**dass** die jeweilige Heizeinrichtung (18) im Bereich eines Mischers (17) angeordnet ist, der im Abgasrohr (3) stromab eines Injektors (15) zum Einbringen von Reaktionsmittel in die Abgasströmung (7) angeordnet ist.

8. Abgasanlage nach Anspruch 7,
**dadurch gekennzeichnet,**
**dass** der Mischer (17) einen zylindrischen Rohrkörper (36) aufweist, von dem mehrere Leitschaufeln (37) abstehen und der an der Innenseite (5) der Rohrwand (4) anliegt.

9. Abgasanlage nach Anspruch 8,
**dadurch gekennzeichnet,**
**dass** die Rohrwand (4) im Bereich des Mischers (17) eine axiale Unterbrechung (38) aufweist, die vom Rohrkörper (36) überbrückt oder ausgefüllt ist.

10. Abgasanlage nach einem der Ansprüche 1 bis 7,
**dadurch gekennzeichnet,**
- **dass** bei einer Abgasanlage nach Anspruch 9 die jeweilige Heizwendel (21) im Bereich der Unterbrechung (38) direkt am Rohrkörper (36) anliegt, und/oder
- **dass** bei einer Abgasanlage (1) nach Anspruch 8 oder 9 die Heizwendel (21) im Bereich des Rohrkörpers (36) eine größere Wicklungsdichte aufweist als außerhalb des Rohrkörpers (36).

11. Abgasanlage nach einem der Ansprüche 1 bis 10,
**dadurch gekennzeichnet,**
- **dass** die Heizeinrichtung (18) eine Steuerung mittels Zeit- und/oder Kennfeld besitzt, oder
- **dass** die Heizeinrichtung (18) wenigstens ein PTC-Element aufweist, das mit dem Leiter (23) in Reihe geschaltet ist oder das durch den Leiter (23) gebildet ist, oder
- **dass** die Heizeinrichtung (18) eine Regelung mittels wenigstens eines Temperatursensors (43) besitzt.

12. Abgasanlage nach einem der Ansprüche 1 bis 11,
**dadurch gekennzeichnet,**
**dass** die Heizeinrichtung (18) eine Steuereinrichtung (42) aufweist, die so ausgestaltet und/oder programmiert ist, dass sie eine Bestromung der jeweiligen Heizwendel (21) gemäß dem Verfahren nach Anspruch 14 oder 15 durchführt.

13. Verfahren zum Betreiben einer Abgasanlage (1) für eine Brennkraftmaschine nach einem der Ansprüche 1 bis 12,
- wobei die Abgasanlage (1) einen Abgasstrang (2) aufweist, der wenigstens ein Abgasrohr (3) besitzt, dessen Rohrwand (4) mit einer Innenseite (5) einen Abgaspfad (6) zum Führen einer Abgasströmung (7) begrenzt,
- wobei die Abgasanlage (1) wenigstens eine elektrische Heizeinrichtung (18) zum Beheizen wenigstens eines Längsabschnitts des Abgasrohrs (3) aufweist, die wenigstens eine Heizwendel (21) besitzt, die im jeweiligen Längsabschnitt das Abgasrohr (3) an einer Außenseite (22) der Rohrwand (4) mehrfach umschlingt,
- bei dem eine Bestromung der jeweiligen Heizwendel (21) so gesteuert und/oder geregelt wird, dass wenigstens ein Bereich im Abgasrohr (3), der einer Kondensationsgefahr einer in der Abgasströmung (7) mitgeführten verdampften Flüssigkeit oder einer Niederschlagsgefahr einer in die Abgasströmung (7) eingebrachten Flüssigkeit ausgesetzt ist, über eine Verdampfungstemperatur der jeweiligen Flüssigkeit aufgeheizt wird.

14. Verfahren nach Anspruch 13,
**dadurch gekennzeichnet,**
**dass** bei der Bestromung der jeweiligen Heizwendel (21) eine aktuelle Abgastemperatur und/oder eine aktuelle Reaktionsmitteltemperatur und/oder eine aktuelle Reaktionsmitteleinspritzmenge berücksichtigt wird/werden.

## Claims

1. Exhaust gas system for an internal combustion engine,
- with an exhaust gas tract (2) comprising at least one exhaust gas pipe (3) whose pipe wall (4) limits with its inner side (5) an exhaust gas path (6) for guiding an exhaust gas flow (7),
- with at least one electric heating device (18) for heating at least one longitudinal section of the exhaust gas pipe (3),
- said heating device (18) comprising at least one heating coil (21) entangling the exhaust gas pipe (3) several times at an outer side (22) of the pipe wall (4),
- the respective heating coil (21) comprising an electrical conductor (23) made of a resistor heating material,
- an electrical isolator (24) being arranged between the conductor (23) and the outer side (22) of the pipe wall (4),
- said heating device (18) comprising a thermally isolating sheath (25) coating the exhaust gas pipe (3) at least in the region of the respective heating coil (21),
**characterized by** such a heating device (18) being arranged in the region of a reaction means supply arrangement (19) comprising the exhaust gas pipe (3) for supporting the evaporation of a precipitation by a reaction means inserted via said reaction means supply arrangement (19) in liquid form.

2. Exhaust gas system according to claim 1,
**characterized in that** the sheath (25) comprises a shell (26) mounted at the exhaust gas pipe (3) and an electrically isolating filling (27) filling an annular space (28) between the shell (26) and the exhaust gas tube (3), where the respective heating coil (21) is arranged.

3. Exhaust gas system according to claim 1 or 2,
**characterized in that**
- the isolator (24) is formed by an insulating layer (29) applied to the outer side (22) of the pipe wall (4), wherein the conductor (23) is wound on said insulating layer (29) and is in contact with the latter, or
- **in that** the respective heating coil (21) comprises a core (31) forming the conductor (23) and a shell (32) forming at least part of the isolator (24) and coating the core (31).

4. Exhaust gas system according to one of claims 1 to 3,
**characterized in that**
such a heating device (18) is arranged in the region of an exhaust gas probe (20) which is mounted at the exhaust gas pipe (3).

5. Exhaust gas system according to one of claims 1 to 4,
**characterized in that** the respective heating device (18) is arranged in the region of an injector (15) for inserting a reaction means into the exhaust gas flow (7).

6. Exhaust gas system according to one of claims 1 to 5,
**characterized in that** the respective heating device (18) is arranged in the region of a wall section (34) of the exhaust gas pipe (3) opposed to the injector (15) in an injection direction of an injector (15) for inserting a reaction means into the exhaust gas flow (7).

7. Exhaust gas system according to one of claims 1 to 6,
**characterized in that**
the respective heating device (18) is arranged in the region of a mixer (17) arranged in the exhaust gas pipe (3) downstream of an injector (15) for inserting a reaction means into the exhaust gas flow (7).

8. Exhaust gas system according to claim 7,
**characterized in that** the mixer (17) comprises a cylindrical pipe body (36) from which several guide blades (37) project and which abuts at the inner side (5) of the pipe wall (4).

9. Exhaust gas system according to claim 8,
**characterized in that**
the pipe wall (4) comprises an axial interruption (38) in the region of the mixer (17) which is bridged or filled by the pipe body (36).

10. Exhaust gas system according to one of claims 1 to 7,
**characterized in that**
- in an exhaust gas system according to claim 9 the respective heating coil (21) directly abuts at the pipe body (36) in the region of the interruption (38) and/or
- **in that** in an exhaust gas system (1) according to claim 8 or 9 the heating coil (21) has a higher winding density in the region of the pipe body (36) than outside the pipe body (36).

11. Exhaust gas system according to one of claims 1 to 10,
**characterized in that**
- the heating device (18) comprises a control by means of a time field and a characteristic map, or **in that**
- the heating device (18) comprises at least one PTC element connected in series with the conductor (23) or formed by the conductor (23), or **in that**
- the heating device (18) comprises a control by means of at least one temperature sensor (43).

12. Exhaust gas system according to one of claims 1 to 11,
**characterized in that**
the heating device (18) comprises a control device (42) which is adapted and/or programmed so that it carries out an energization of the respective heating coil (21) according to the method on claim 14 or 15.

13. Method for operating an exhaust gas system (1) for an internal combustion engine according to one of claims 1 to 12,
- with the exhaust gas system (1) comprising an exhaust tract (2) comprising at least one exhaust gas pipe (3) whose pipe wall (4) limits with its inner side (5) an exhaust gas path (6) for guiding an exhaust gas flow (7),
- with the exhaust gas system (1) comprising at least one electric heating device (18) for heating at least one longitudinal section of the exhaust gas pipe (3), which comprises at least one heating coil (21) entangling the exhaust gas pipe (3) several times at an outer side (22) of the pipe wall (4) in the respective longitudinal section,
- wherein an energization of the respective heating coil (21) is controlled so that at least a part of the exhaust gas pipe (3) exposed to a condensation risk of an evaporated liquid carried along in the exhaust gas flow (7) or to a precipitation risk of a liquid inserted into the exhaust gas flow (7) is heated to more than an evaporation temperature of the respective liquid.

14. Method according to claim 13,
**characterized in that**
during the energization of the respective heating coil (21) a current exhaust gas temperature and/or a current reaction means temperature and/or a current reaction means injection volume are taken into consideration.

## Revendications

1. Système d'échappement pour un moteur à combustion,
- avec un tronçon de gaz d'échappement (2), comprenant au moins un tube d'échappement de gaz (3) dont la paroi du tube (4) limite par une face interne (5) une voie de gaz d'échappement (6) pour guider une circulation de gaz d'échappement (7),
- avec au moins un dispositif électrique de chauffage (18) pour chauffer au moins une section longitudinale du tube d'échappement de gaz (3),
- le dispositif électrique de chauffage (18) comprenant au moins une spirale chauffante (21) qui dans la section longitudinale respective s'enroule plusieurs fois autour du tube d'échappement de gaz (3) à une face extérieure (22) de la paroi du tube (4),
- la spirale chauffante (21) respective comprenant un conducteur électrique (23) fait d'un matériau chauffant résistant,
- un isolateur électrique (24) étant arrangé entre le conducteur électrique (23) et la face extérieure (22) de la paroi du tube (4),
- le dispositif électrique de chauffage (18) comprenant une enveloppe thermiquement isolant (25) entourant le tube d'échappement de gaz (3) au moins dans la région de la spirale chauffante (21) respective, **caractérisé en ce que** ledit dispositif électrique de chauffage (18) est arrangé dans la région d'un conduit de réactif (19) entourant le tube d'échappement de gaz (3) pour soutenir l'évaporation d'une précipitation d'un réactif inséré via le conduit de réactif (19) sous forme liquide.

2. Système d'échappement selon la revendication 1,
**caractérisé en ce que** l'enveloppe (25) comprend une coque (26) montée au tube d'échappement de gaz (3) et un remplissage électriquement isolant (27) remplissant un espace annulaire (28) entre la coque (26) et le tube d'échappement de gaz (3) où la spirale chauffante (21) respective est arrangée.

3. Système d'échappement selon les revendications 1 ou 2,
**caractérisé en ce que**
- l'isolant (24) est formé par une couche isolante (29) appliquée sur la face extérieure (22) de la paroi du tube (4), le conducteur électrique (23) étant enroulé sur cette couche isolante (29) et étant en contact avec cette dernière, ou
- la spirale chauffante (21) respective comprenant un noyau (31) formant le conducteur électrique (23) ainsi qu'une gaine (32) entourant le noyau (31) et formant au moins une partie de l'isolateur (24).

4. Système d'échappement selon une des revendications 1 à 3, **caractérisé en ce qu'**un tel dispositif de chauffage (18) est arrangé dans la région d'un capteur de gaz d'échappement (20) monté au tube d'échappement de gaz (3).

5. Système d'échappement selon une des revendications 1 à 4.
**caractérisé en ce que** le dispositif de chauffage (18) respectif est arrangé dans la région d'un injecteur (15) pour insérer du réactif dans la circulation de gaz d'échappement (7).

6. Système d'échappement selon une des revendication 1 à 5, **caractérisé en ce que**
le dispositif de chauffage (18) respectif est arrangé dans la région d'une section de paroi (34) du tube d'échappement de gaz (3) opposée à l'injecteur (15) dans un sens d'injection d'un injecteur (15) pour insérer du réactif dans la circulation de gaz d'échappement (7).

7. Système d'échappement selon une des revendication 1 à 6, **caractérisé en ce que** le dispositif de chauffage (18) respectif est arrangé dans la région d'un mélangeur (17) arrangé en aval d'un injecteur (15) pour insérer du réactif dans la circulation de gaz d'échappement (7).

8. Système d'échappement selon la revendication 7,
**caractérisé en ce que** le mélangeur (17) comprend un corps de tube (36) cylindrique, duquel s'étendent plusieurs pales de guidage (37) et qui arrive en butée à la paroi du tube (4).

9. Système d'échappement selon la revendication 8,
**caractérisé en ce que**
la paroi du tube (4) comprend dans la région du mélangeur (17) une interruption axiale (38) qui est comblé ou rempli par le corps de tube (36).

10. Système d'échappement selon une des revendication 1 à 7, **caractérisé en ce que**
- dans un système d'échappement selon la revendication 9 la spirale chauffante (21) respective repose directement contre le corps de tube (36) dans la région de l'interruption (38) et/ou **en ce que**
- dans un système d'échappement (1) selon la revendication 8 ou 9 la spirale chauffante (21) montre une densité d'enroulement plus grande dans la région du corps de tube (36) que hors du corps de tube (36).

11. Système d'échappement selon une des revendication 1 à 10, **caractérisé en ce que**
- le dispositif de chauffage (18) comprend un mécanisme de commande par champ horaire et/ou champ caractéristique, ou **en ce que**
- le dispositif de chauffage (18) comprend au moins un élément CTP connecté en série au conducteur électrique (23) ou formé par le conducteur électrique (23), ou **en ce que**
- **en ce que** le dispositif de chauffage (18) comprend un mécanisme de commande par au moins un capteur de température (43).

12. Système d'échappement selon une des revendication 1 à 11, **caractérisé en ce que**
le dispositif de chauffage (18) comprend un dispositif de commande (42) adapté et/ou programmé de sorte qu'il réalise une alimentation électrique de la spirale chauffante (21) respective selon la méthode de la revendication 14 ou de la revendication 15.

13. Méthode pour opérer un système d'échappement (1) pour un moteur à combustion selon une des revendications 1 à 12,
- le système d'échappement (1) comprenant un tronçon de gaz d'échappement (2), comprenant au moins un tube d'échappement de gaz (3) dont la paroi du tube (4) limite par une face interne (5) une voie de gaz d'échappement (6) pour guider une circulation de gaz d'échappement (7),
- le système d'échappement (1) comprenant au moins un dispositif électrique de chauffage (18) pour chauffer au moins une section longitudinale du tube d'échappement de gaz (3), comprenant au moins une spirale chauffante (21) qui dans la section longitudinale respective s'enroule plusieurs fois autour du tube d'échappement de gaz (3) à une face extérieure (22) de la paroi du tube (4),
- l'alimentation électrique de la spirale chauffante (21) respective étant commandée de sorte qu'au moins une région du tube d'échappement de gaz (3) exposée à un risque de condensation d'un liquide évaporé dans la circulation de gaz d'échappement (7) ou à un risque de précipitation d'un liquide inséré dans la circulation de gaz d'échappement (7) est chauffée à une température plus élevée que la température d'évaporation du liquide respectif

14. Méthode selon la revendication 13;
**caractérisé en ce que** lors de l'alimentation électrique de la spirale chauffante (21) respective une température actuelle des gaz d'échappement et/ou une température actuelle du réactif et/ou un volume d'injection actuel de réactif sont prises en considération.
